# EUROPÄISCHE PATENTSCHRIFT

(11) **EP 1 211 824 B1**
(45) Veröffentlichungstag und Bekanntmachung des Hinweises auf die Patenterteilung: **06.08.2008**
(21) Anmeldenummer: 01125556.9
(22) Anmeldetag: 25.10.2001
(51) Int. Cl.: H04B 7/26

(54) **Verfahren zum Synchronisieren von an verschiedene Vermittlungssystemteile gekoppelten Basisstationen eines Mobilfunknetzes**
Method of synchronization of a plurality of base stations of a mobile radio network coupled to exchanges
Procédé de synchronisation de diverses stations de base d'un réseau radio mobile couplées à des commutateurs

(30) Priorität: 01.12.2000 DE 10059645
(43) Veröffentlichungstag der Anmeldung: 05.06.2002
(73) Patentinhaber: Siemens Enterprise Communications GmbH & Co. KG, 81379 München (DE)
(72) Erfinder: Becker, Claus-Georg, 14052 Berlin (DE); Eberstein, Wolfram, Dr., 12161 Berlin (DE); Nacke, Philipp, 12163 Berlin (DE); Pusch, Wolfgang, 33142 Bueren (DE)

(56) Entgegenhaltungen:
- EP-A- 1 052 793
- US-A- 5 809 092

## Beschreibung

Bei zeitgemäßen Kommunikationssystemen werden Endgeräte, die unterschiedlichen Zwecken dienen können, wie z.B. einem Übertragen von Sprach-, Video-, Fax-, Datei-, Programm- und/oder Meßdaten in zunehmendem Maße drahtlos angekoppelt. Mittlerweile haben sich hierfür mehrere unterschiedliche Funknetztechnologien, wie z.B. GSM (Global System for Mobile Communication) und DECT (Digital Enhanced Cordless Telephony) für unterschiedliche Einsatzgebiete herausgebildet. In der Regel erfolgt die drahtlose Anbindung von mobilen Endgeräten über eine oder mehrere Basisstationen, die ihrerseits an weiterführende Vermittlungseinrichtungen oder Vermittlungssystemteile angeschlossen sind.

Um einen größeren Bereich mit drahtlosen Verbindungsmöglichkeiten zu versorgen, sind im allgemeinen mehrere Basisstationen so über den zu versorgenden Bereich verteilt, dass ihre Funkzellen ein flächendeckendes Mobilfunknetz bilden. Im Bereich einer solchen Überdeckung kann sich ein Teilnehmer frei bewegen, wobei eine bestehende Verbindung von einer Funkzelle in die nächste, bzw. von einer Basisstation zur nächsten Basisstation, unterbrechungsfrei weitergereicht werden kann. Ein unterbrechungsfreier Wechsel der Verbindungsführung wird häufig auch als "Seamless Handover" bezeichnet, wobei als unterbrechungsfrei ein für einen Teilnehmer nicht wahrnehmbarer Wechsel verstanden wird.

Eine Durchführung eines solchen Seamless Handover stellt insbesondere bei DECT-Systemen sehr hohe Anforderungen an die Synchronität der beteiligten Basisstationen. So müssen z.B. benachbarte Basisstationen eines DECT-Mobilfunknetzes für eine einwandfreie Seamless-Handover-Prozedur eine Frequenzgenauigkeit von mindestens +/- 5 ppm einhalten. Zudem müssen sie ihre jeweiligen Funkrahmen (10 ms) sowie Funküberrahmen (600 ms und 800 ms) synchron zueinander halten. Die gegenseitige Abweichung der Funkrahmen darf +/- 1,8 Mikrosekunden nicht überschreiten.

Die geforderte Synchronität ist insbesondere bei verteilten Mobilfunknetzen, die mehrere Vermittlungssystemteile aufweisen, gemäß dem bekannten Stand der Technik nur mit erheblichem zusätzlichen Aufwand zu gewährleisten. So ist beispielsweise bei gegenwärtig in der Entwicklung befindlichen Mobilfunknetzen vorgesehen, zur Herstellung einer vermittlungsknotenübergreifenden Synchronität von DECT-Basisstationen, jedem Vermittlungssystemteil von außen eine hochgenaue Frequenzund Zeitinformation über einen GPS-Empfänger (Global Positioning System) zuzuführen. Die erforderlichen GPS-Empfänger stellen jedoch einen erheblichen zusätzlichen Kostenfaktor dar.

US-5809092 offenbart ein Beispiel des Standes der Technik für ein DECT-System und EP 1052793 offenbart ein Beispiel für ein Kommunikationsnetzwerk unter Verwendung des Standards 1394.

Es ist Aufgabe der vorliegenden Erfindung, ein Verfahren für ein Mobilfunknetz anzugeben, mit dem an verschiedene Vermittlungssystemteile gekoppelte Basisstationen auf einfache Weise synchronisiert werden können.

Gelöst wird diese Aufgabe durch ein Verfahren mit den Merkmalen des Patentanspruchs 1.

Es sei an dieser Stelle darauf hingewiesen, dass die Abfolge der in Patentanspruch 1 angegebenen Verfahrensschritte a und b nicht notwendigerweise deren zeitlicher Reihenfolge entsprechen muss.

Die vorliegende Erfindung erlaubt es, an verschiedene Vermittlungssystemteile, wie z.B. verschiedene Vermittlungseinrichtungen oder Netzknoten eines Kommunikationsnetzes, angekoppelte Basisstationen zu synchronisieren. Zu diesem Zweck wird in Funkreichweite einer an einen ersten Vermittlungssystemteil angekoppelten, ersten Basisstation eine an einen zweiten Vermittlungssystemteil angekoppelte zweite Basisstation aufgestellt. Nach einer anfänglichen Synchronisierung der ersten Basisstation zum ersten Vermittlungssystemteil und der zweiten Basisstation zum zweiten Vermittlungssystemteil empfängt die zweite Basisstation von der ersten Basisstation gesendete Funkrahmen und ermittelt deren zeitliche Abweichung zum eigenen Funkrahmentakt. Diese zeitliche Abweichung wird von der zweiten Basisstation, z.B. in Form einer Abweichungsoder Verzögerungsinformation, die beispielsweise einen Zeit-, Bit-, Zeitschlitz-, Funkrahmen- und/oder Funküberrahmenversatz angibt, zum zweiten Vermittlungssystemteil übertragen. Der zweite Vermittlungssystemteil übermittelt infolgedessen ein drittes Synchronisationssignal zur zweiten Basisstation. Hierbei wird ein Übermittlungszeitpunkt abhängig von der übertragenen zeitlichen Abweichung so gewählt, dass der Funkrahmentakt der zweiten Basisstation durch zeitliches Ausrichten am dritten Synchronisationssignal zu den Funkrahmen der ersten Basisstation synchronisiert wird.

Die angegebenen Synchronisationssignale können außer an die erste bzw. zweite Basisstation gegebenenfalls auch an weitere an den ersten bzw. zweiten Vermittlungssystemteil angekoppelte Basisstationen übertragen werden. Diese weiteren Basisstationen werden dadurch jeweils zur ersten bzw. zweiten Basisstation synchronisiert. Damit sind nach der erfindungsgemäßen Synchronisierung zwischen erster und zweiter Basisstation auch die weiteren Basisstationen sämtlich zueinander synchronisiert.

Ein wesentlicher Vorteil des erfindungsgemäßen Verfahrens besteht darin, dass zur vermittlungssystemteilübergreifenden Synchronisierung von Basisstationen kein zusätzlicher Schaltungs- oder Hardwareaufwand notwendig ist. Weiterhin ist zur Durchführung der Synchronisation kein aufwendiger Meldungsverkehr zwischen den verschiedenen Vermittlungssystemteilen erforderlich.

Durch die Übertragung von Synchronisationssignalen können die Funkrahmen bzw. Funkrahmentakte wesentlich flexibler zeitlich ausgerichtet werden, als beispielsweise durch Übermittlung einer Taktregelinformation. Durch ein übertragenes Synchronisationssignal wird ein genauer Zeitpunkt vorgegeben, an dem beispielsweise der Übertragungsbeginn eines Funkrahmens, Funküberrahmens, Zeitschlitzes und/oder Bits sowie ein Startzeitpunkt oder Rücksetzzeitpunkt eines Zählers orientiert werden kann. Insbesondere kann durch ein Synchronisationssignal auch ein zunächst ganz unkorrelierter Funkrahmentakt unmittelbar synchronisiert werden.

Darüber hinaus können durch ein Synchronisationssignal auch Zähler für Funküberrahmen in funkrahmenübergreifender Weise gesetzt, rückgesetzt oder ausgelöst werden. Damit können durch das erfindungsgemäße Verfahren Basisstationen sowohl hinsichtlich ihrer Funkrahmen als auch hinsichtlich ihrer Funküberrahmen einheitlich synchronisiert werden. Dies stellt insbesondere bei DECT-Basisstationen einen wesentlichen Vorteil dar.

Vorteilhafte Ausführungsformen und Weiterbildungen der Erfindung sind in den abhängigen Ansprüchen angegeben.

Nach einer vorteilhaften Weiterbildung der Erfindung kann bei der Wahl des Übermittlungszeitpunktes des dritten Synchronisationssignals dessen Laufzeit zwischen dem zweiten Vermittlungssystemteil und der zweiten Basisstation ausgleichend berücksichtigt werden. Zu diesem Zweck können vor Übermittlung eines Synchronisationssignals zunächst die Signallaufzeiten zwischen dem zweiten Vermittlungssystemteil und allen daran angeschlossenen Basisstationen gemessen werden. Aus den gemessenen Verzögerungszeiten kann anschließend jeweils eine Verzögerungsinformation abgeleitet werden, die zu der betreffenden Basisstation übertragen wird. Die Basisstationen können dann nachfolgend empfangene Synchronisationssignale abhängig von der jeweils übermittelten Verzögerungsinformation verzögern. Eine jeweilige Verzögerung erfolgt dabei in einer Weise, dass individuelle Unterschiede in der Signallaufzeit zwischen den Basisstationen und dem zweiten Vermittlungssystemteil ausgeglichen werden. Die Synchronisationsgenauigkeit erhöht sich dadurch beträchtlich.

Weiterhin kann der Übermittlungszeitpunkt eines Synchronisationssignals vom zweiten Vermittlungssystemteil abhängig von einer gemessenen Signallaufzeit vorverlegt werden, um die Signallaufzeit auszugleichen.

Außer beim zweiten Vermittlungssystemteil können die Signallaufzeiten zu jeweils angekoppelten Basisstationen auch beim ersten und gegebenenfalls weiteren Vermittlungssystemteilen des Mobilfunknetzes gemessen und beim Senden und/oder Empfangen von Synchronisationssignalen ausgleichend berücksichtigt werden.

Gemäß einer weiteren vorteilhaften Ausführungsform der Erfindung kann das erste und das zweite Synchronisationssignal jeweils beim Hochlauf des betreffenden ersten bzw. zweiten Vermittlungssystemteils übermittelt werden. Der erste Vermittlungssystemteil kann weiterhin beim Hochlauf vermittlungssystemteilübergreifend als Synchronisationsquelle (Master) und der zweite Vermittlungssystemteil als Synchronisationssenke konfiguriert werden. Welcher Vermittlungssystemteil beim Hochlauf als Synchronisationsquelle konfiguriert wird, kann vorzugsweise durch Systemadministration festgelegt werden. Die Konfigurierung beim Hochlauf vermeidet ein ansonsten erforderliches, aufwendiges Aushandeln des Synchronisationsablaufes zwischen den einzelnen Vermittlungssystemteilen.

Vorzugsweise kann der als Synchronisationsquelle konfigurierte Vermittlungssystemteil eine oder mehrere daran angekoppelte Basisstationen als Sender von Funkrahmen konfigurieren. Entsprechend kann ein als Synchronisationssenke konfigurierter Vermittlungssystemteil eine oder mehrere daran angekoppelte Basisstationen als Empfänger der Funkrahmen konfigurieren. Das Senden bzw. Empfangen der Funkrahmen kann dabei z.B. durch ein jeweiliges Synchronisationssignal ausgelöst werden.

Nach einer vorteilhaften Weiterbildung der Erfindung kann die zweite Basisstation anhand von im laufenden Betrieb empfangenen Funkrahmen eine Drift des eigenen Funkrahmentaktes ermitteln und eine Driftinformation zum zweiten Vermittlungssystemteil übertragen. Dieser kann aus der übermittelten Driftinformation eine Korrekturinformation ableiten und zu einer oder mehreren angekoppelten Basisstationen übertragen. Diese Basisstationen können dann anhand der übertragenen Korrekturinformation ihren Funkrahmentakt nachregeln, um ihre Synchronität zu den empfangenen Funkrahmen zu wahren oder wiederherzustellen. Auf diese Weise kann z.B. eine temperaturbedingte Drift des Funkrahmentaktes vermieden bzw. ausgeglichen werden.

Die Erfindung wird nachfolgend am Beispiel eines DECT-Mobilfunknetzes anhand der Zeichnung näher erläutert.

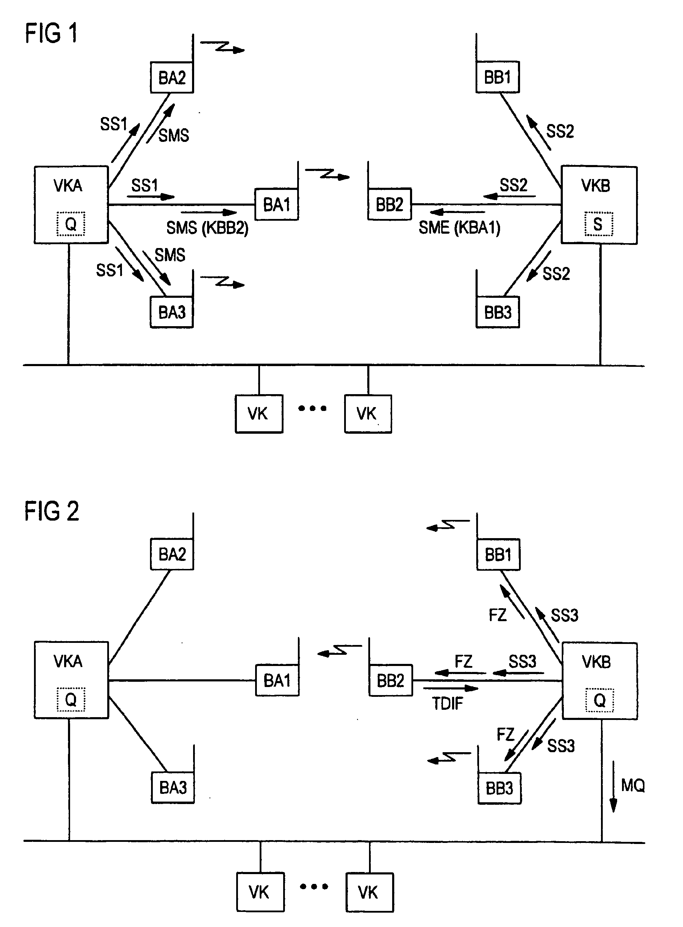

Dabei zeigen jeweils in schematischer Darstellung
Fig 1, Fig 2 und Fig 3 ein DECT-Mobilfunknetz mit mehreren Vermittlungsknoten in aufeinanderfolgenden Verfahrensphasen.

In den Figuren 1,2 und 3 ist jeweils dasselbe DECT-Mobilfunknetz (DECT: Digital Enhanced Cordless Telephony) schematisch dargestellt. Das DECT-Mobilfunknetz umfaßt einen Vermittlungsknoten VKA als ersten Vermittlungssystemteil, einen Vermittlungsknoten VKB als zweiten Vermittlungssystemteil sowie mehrere weitere Vermittlungsknoten VK. Die Vermittlungsknoten VKA, VKB, VK sind untereinander über ein Kommunikationsnetz, wie z.B. ein Lokales Netz (LAN; Local Area Network) oder ein Weitverkehrsnetz (WAN; Wide Area Network), verbunden. An den Vermittlungsknoten VKA sind DECT-Basisstationen BA1, BA2 und BA3 angeschlossen, die ein mehrzelliges Funknetz ausbilden. Entsprechend sind an den Vermittlungsknoten VKB DECT-Basisstationen BB1, BB2 und BB3 angeschlossen, die ebenfalls ein mehrzelligen Funknetz ausbilden. Die Basisstationen BA1 und BB2 sind in geringem Abstand zueinander aufgestellt, so dass sie sich in gegenseitiger Funkreichweite befinden.

**Fig 1** zeigt das DECT-Mobilfunknetz in einer ersten Verfahrensphase beim Hochlauf der Vermittlungsknoten VKA und VKB. Der Vermittlungsknoten VKA wird im Zuge seines Hochlaufs als Synchronisationsquelle Q und der Vermittlungsknoten VKB im Zuge seines Hochlaufs als Synchronisationssenke S konfiguriert. Die Information darüber, welcher Vermittlungsknoten als Synchronisationsquelle Q bzw. Synchronisationssenke S beim Hochlauf konfiguriert wird, wird vorzugsweise vorab durch Administration in den Vermittlungsknoten hinterlegt.

Im Rahmen des Hochlaufs wird von dem als Synchronisationsquelle Q konfigurierten Vermittlungsknoten VKA eine Steuermeldung SMS zu den Basisstationen BA1, BA2 und BA3 übermittelt. Durch die Steuermeldung SMS werden die Basisstationen BA1, BA2 und BA3 im sogenannten DECT-Normalmodus initialisiert, in dem die Basisstationen BA1, BA2 und BA3 durch Empfang eines Synchronisationssignals zum Senden von Funkrahmen veranlaßt werden können. Anschließend wird durch den Vermittlungsknoten VKA ein solches Synchronisationssignal SS1 an alle angeschlossenen Basisstationen BA1, BA2 und BA3 übermittelt, wodurch diese zum Senden von Funkrahmen veranlaßt werden, die zeitlich am empfangenen Synchronisationssignal SS1 ausgerichtet werden. Durch das Synchronisationssignal SS1 werden die Basisstationen BA1, BA2 und BA3 zueinander synchronisiert. Das Senden von Funkrahmen ist in Fig 1 jeweils durch einen stilisierten Blitz angedeutet.

Im Rahmen des Hochlaufs des als Synchronisationssenke S konfigurierten Vermittlungsknotens VKB sendet dieser eine Steuermeldung SME zur Basisstation BB2. Mit der Steuermeldung SME wird eine die Basisstation BA1 identifizierende Kennung KBA1 zur Basisstation BB2 übertragen. Durch die übertragene Steuermeldung SME wird die Basisstation BB2 im sogenannten DECT-Mobilteilmodus initialisiert, in dem die Basisstation BB2 versucht, Funkrahmen von einer durch die übertragene Kennung KBA1 identifizierten Basisstation, hier BA1, zu empfangen. Nach der Übermittlung der Steuermeldung SME überträgt der Vermittlungsknoten VKB ein Synchronisationssignal SS2 an alle angeschlossenen Basisstationen BB1, BB2 und BB3. Durch das übermittelte Synchronisationssignal SS2 werden die Basisstationen BB1, BB2 und BB3 dazu veranlaßt, ihren jeweiligen Funkrahmentakt zeitlich am empfangenen Synchronisationssignal SS2 auszurichten. Die Basisstationen BB1, BB2 und BB3 werden dadurch zueinander synchronisiert. Anschließend geht die Basisstation BB2 auf Empfang und empfängt im vorliegenden Ausführungsbeispiel die von der Basisstation BA1 gesendeten Funkrahmen. Anschließend ermittelt die Basisstation BB2 die zeitliche Abweichung zwischen den empfangenen Funkrahmen und dem eigenen Funkrahmentakt.

Vorzugsweise kann auch mit der Steuermeldung SMS eine die Basisstation BB2 identifizierende Kennung KBB2 zur Basisstation BA1 übertragen werden. Mit der Kennung KBB2 wird der Basisstation BA1 gegenüber diejenige Basisstation, hier BB2, identifiziert, die die Funkrahmen der Basisstation BA1 zu Synchronisationszwecken empfängt. Die gegenseitige Identifizierung der Synchronisationspartner, hier BA1 und BB2, erlaubt es, einen eventuellen Ausfall eines Synchronisationspartners auf beiden Seiten zu erkennen. Bei einem erkannten Ausfall können geeignete Gegenmaßnahmen, wie z.B. eine Suche eines neuen Synchronisationspartners und/oder ein Wechsel zwischen Sende- und Empfangsbetrieb, eingeleitet werden.

Die nachfolgenden Verfahrensphasen des Ausführungsbeispiels sind in **Fig 2** veranschaulicht.

Der ermittelte zeitliche Abstand zwischen den gesendeten Funkrahmen und dem Funkrahmentakt der Basisstation BB2 wird in Form einer Abweichungsinformation TDIF von der Basisstation BB2 zum Vermittlungsknoten VKB übermittelt. Die Abweichungsinformation TDIF gibt dabei im vorliegenden Ausführungsbeispiel insbesondere den Bitversatz innerhalb eines Funkrahmens und den Funkrahmenversatz innerhalb eines Funküberrahmens an. Anhand des übermittelten Funkrahmenversatzes ermittelt der Vermittlungsknoten VKB einen Funkrahmenzählerstand FZ, der der Position des nächsten von der Basisstation BA1 zu sendenden Funkrahmens innerhalb dessen Funküberrahmens entspricht. Der ermittelte Funkrahmenzählerstand FZ wird anschließend zu allen angeschlossenen Basisstationen BB1, BB2 und BB3 übertragen, um dort einen jeweiligen Funkrahmenzähler (nicht dargestellt) auf diesen Funkrahmenzählerstand FZ zu setzen. Nachfolgend wird vom Vermittlungsknoten VKB ein Synchronisationssignal SS3 zu allen angeschlossenen Basisstationen BB1, BB2 und BB3 übertragen. Der Übermittlungszeitpunkt wird dabei vom Vermittlungsknoten VKB abhängig von der übermittelten Abweichungsinformation TDIF so gewählt, dass der jeweilige Funkrahmentakt der Basisstationen BB1, BB2 und BB3 durch zeitliches Ausrichten am Synchronisationssignal SS3 zu den gesendeten Funkrahmen der Basisstation BA1 synchronisiert wird. Vorzugsweise wird bei der Wahl der Übermittlungszeitpunkts auch die Laufzeit des Synchronisationssignals SS3 ausgleichend berücksichtigt. Durch das Synchronisationssignal SS3 wird außerdem ein Start der Funkrahmenzähler der Basisstationen BB1, BB2 und BB3 ab dem übermittelten Funkrahmenzählerstand FZ veranlaßt. Auf diese Weise werden die Basisstationen BB1, BB2 und BB3 sowohl untereinander als auch zu den Basisstationen BA1, BA2 und BA3 synchronisiert; und zwar auch hinsichtlich ihrer Funküberrahmen.

Die Synchronisationssignale SS1, SS2 und/oder SS3 können vorzugsweise durch sog. T-Bits realisiert werden, die häufig auf OP₀-Leitungen als Flusssteuerungsignale eingesetzt werden.

Infolge des Synchronisationssignals SS3 beginnen die Basisstationen BB1, BB2 und BB3 ihrerseits synchronisierte Funkrahmen zu senden, gehen in den DECT-Normalmodus über und stehen für einen Aufbau von Verbindungen zu mobilen Endgeräten (nicht dargestellt) zur Verfügung. Die von den Basisstationen BB1, BB2 und BB3 gesendeten Funkrahmen sind in Fig 2 durch stilisierte Blitze angedeutet.

Weiterhin wird nach erfolgter Synchronisation der Vermittlungsknoten VKB zur Synchronisationsquelle Q umkonfiguriert, was in Fig 2 durch ein punktiertes Rechteck hervorgehoben ist. Der Vermittlungsknoten VKB sendet infolgedessen zu den mit ihm vernetzten Vermittlungsknoten VKA und VK des DECT-Mobilfunknetzes eine Meldung MQ, die angibt, dass der Vermittlungsknoten VKB nachfolgend als Synchronisationsquelle Q zur Verfügung steht. Alternativ dazu können die an den Vermittlungsknoten VKB angeschlossenen Basisstationen BB1, BB2 und BB3 nach erfolgter Synchronisation über ihr Funkfeld signalisieren, dass sie als Synchronisationsquelle verfügbar sind.

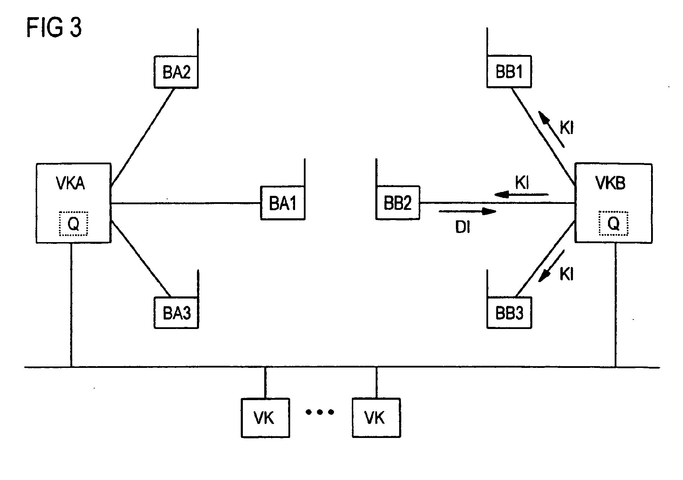

**Fig 3** zeigt das DECT-Mobilfunknetz beim Nachregeln der Funkrahmentakte der Basisstationen BB1, BB2 und BB3 während des laufenden Betriebs. Ein Nachregeln der Funkrahmentakte kann erforderlich werden, wenn Systemtaktgeneratoren (nicht dargestellt) der Basisstationen BB1, BB2 oder BB3 oder des Vermittlungsknotens VKB z.B. aufgrund von Temperatureinflüssen einer Frequenzdrift unterliegen. Zum Ermitteln einer solchen Drift wird durch die Basisstation BB2 gemessen, in welchem Ausmaß sich der eigene Funkrahmentakt gegenüber den von der Basisstation BA2 empfangenen Funkrahmen während eines Meßzeitintervalls von beispielsweise einer Sekunde zeitlich verschiebt. Aus dem Meßergebnis wird eine Driftinformation DI abgeleitet und zum Vermittlungsknoten VKB übertragen. Die Driftinformation DI kann dabei zum Beispiel angeben, wieviele Systemtakte, Bittakte oder Mikrosekunden der eigene Funkrahmentakt während des Meßzeitintervalls gegen das Funkfeld der Basisstation BA1 driftet. Der Vermittlungsknoten VKB ermittelt abhängig von der übertragenen Driftinformation DI eine Korrekturinformation KI und übermittelt diese an die angeschlossenen Basisstationen BB1, BB2 und BB3. Durch die übermittelten Korrekturinformation KI werden die Basisstationen BB1, BB2 und BB3 dazu veranlaßt, ihre jeweiligen Funkrahmentakte so nachzuregeln, dass diese wieder bitsynchron zum Funkfeld der Basisstation BA1 werden. Die Nachregelung wird von den Basisstation selbständig durchgeführt, so dass zwischen den Basisstationen BB1, BB2 sowie BB3 und dem Vermittlungsknoten VKB kein weiterer Meldungsverkehr erforderlich ist. Ein zusätzlicher Meldungsverkehr zwischen den Vermittlungsknoten VKB und VKA ist ebenfalls nicht notwendig. Die Nachregelung der jeweiligen Funkrahmentakte in den Basisstationen BB1, BB2 und BB3 kann abhängig von der übertragenen Korrekturinformation KI beispielsweise dadurch erfolgen, dass jeder n-te Funkrahmen um ein Bit verlängert oder verkürzt wird. Die Größe n wird dabei abhängig von der Korrekturinformation KI gewählt. Eine solche Korrektur einzelner Funkrahmen kann iterativ in sich vergrößernden Zeitabständen durchgeführt werden. Die Korrekturintervalle können vorzugsweise umgekehrt proportional zur Größe der gemessenen zeitlichen Abweichung, d.h. zur Driftgeschwindigkeit, gewählt werden.

Vorzugsweise wird die Messung der Driftgeschwindigkeit in vorgegebenen Zeitabständen wiederholt, um auf diese Weise die Synchronität aller Basisstationen BA1, BA2, BA3, BB1, BB2 und BB3 während des gesamten laufenden Betriebs zu gewährleisten.

## Patentansprüche

1. Verfahren zum Synchronisieren von an verschiedene Vermittlungsssystemteile gekoppelten Basisstationen eines Mobilfunknetzes, bei dem
a) beim Hochlauf der Vermittlungssystemteile (VKA, VKB) ein erster Vermittlungssystemteil (VKA) als Synchronisationsquelle (Q) und ein zweiter Vermittlungssystemteil (VKB) als Synchronisationssenke (S) konfiguriert wird,
b) eine erste Basisstation (BA1) von der Synchronisationsquelle (Q, VKA) als Sender von Funkrahmen und eine zweite Basisstation (BB2) von der Synchronisationssenke (S, VKB) als Empfänger der Funkrahmen konfiguriert wird,
c) der erste Vermittlungssystemteil (VKA) die daran angekoppelte, erste Basisstation (BA1) durch Übermitteln eines ersten Sycnhronisationssignals (SS1) zum Senden von am ersten Synchronisationssignal (SS1) zeitlich ausgerichteten Funkrahmen veranlasst,
d) der zweite Vermittlungssystemteil (VKB) die daran angekoppelte, zweite Basisstation (BB2) durch Übermitteln eines zweiten Sycnhronisationssignals (SS2) dazu veranlaßt, einen eigenen Funkrahmentakt am zweiten Synchronisationssignal (SS2) zeitlich auszurichten,
e) der zweite Vermittlungssystemteil (VKB) eine Kennung (KBA1) der ersten Basisstation (BA1) zur zweiten Basisstation (BB2) übermittelt,
f) die zweite Basisstation (BB2) anhand der übermittelten Kennung (KBA1) selektiv die gesendeten Funkrahmen der ersten Basisstation (BA1) empfängt, deren zeitliche Abweichung zum eigenen Funkrahmentakt ermittelt sowie die zeitliche Abweichung (TDIF) zum zweiten Vermittlungssystemteil (VKB) überträgt, und
g) der zweite Vermittlungssystemteil (VKB) infolgedessen ein drittes Synchronisationssignal (SS3) zur zweiten Basisstation (BB2) übermittelt, wobei ein Übermittlungszeitpunkt abhängig von der übertragenen zeitlichen Abweichung (TDIF) so gewählt wird, dass der Funkrahmentakt der zweiten Basisstation (BB2) durch zeitliches Ausrichten am dritten Synchronisationssignal (SS3) zu den Funkrahmen der ersten Basisstation (BA1) synchronisiert wird.

2. Verfahren nach Anspruch 1,
**dadurch gekennzeichnet,**
**dass** bei der Wahl des Übermittlungszeitpunkts des dritten
Synchronisationssignals (SS3) dessen Laufzeit zwischen dem zweiten Vermittlungssystemteil (VKB) und der zweiten Basisstation (BB2) ausgleichend berücksichtigt wird.

3. Verfahren nach einem der vorhergehenden Ansprüche,
**dadurch gekennzeichnet,**
**dass** das erste (SS1) und das zweite (SS2) Synchronisationssignal jeweils beim Hochlauf des betreffenden Vermittlungssystemteils (VKA, VKB) übermittelt wird.

4. Verfahren nach einem der vorhergehenden Ansprüche,
**dadurch gekennzeichnet,**
**dass** nach erfolgter Synchronisierung der zweiten Basisstation (BB2), der zweite Vermittlungssystemteil (VKB) als Synchronisationsquelle (Q) für weitere Vermittlungssystemteile (VK, VKB) des Mobilfunknetzes konfiguriert wird.

5. Verfahren nach einem der vorhergehenden Ansprüche,
**dadurch gekennzeichnet,**
**dass** die zweite Basisstation (BB2) anhand von im laufenden Betrieb empfangenen Funkrahmen eine Drift des eigenen Funkrahmentaktes ermittelt und eine Driftinformation (DI) zum zweiten Vermittlungssystemteil (VKB) übermittelt, und
**dass** durch den zweiten Vermittlungssystemteil (VKB) aus der übermittelten Driftinformation (DI) eine Korrekturinformation (KI) abgeleitet und zu mindestens einer weiteren, an den zweiten Vermittlungssystemteil (VKB) gekoppelten Basisstation (BB1, BB3) übertragen wird, die jeweils ihren Funkrahmentakt anhand der übermittelten Korrekturinformation (KI) nachregelt.

## Claims

1. Method for synchronization of base stations which are coupled to different switching system parts in a mobile radio network, in which
a) during the startup of the switching system parts (VKA, VKB), a first switching system part (VKA) is configured as a synchronization source (Q), and a second switching system part (VKB) is configured as a synchronization sink (S),
b) a first base station (BA1) is configured by the synchronization source (Q, VKA) as a radio frame transmitter, and a second base station (BB2) is configured by the synchronization sink (S, VKB) as a radio frame receiver,
c) the first switching system part (VKA) transmits a first synchronization signal (SS1) in order to cause the first base station (BA1), which is coupled to it, to transmit radio frames which are aligned in time with the first synchronization signal (SS1),
d) the second switching system part (VKB) transmits a second synchronization signal (SS2) in order to cause the second base station (BB2), which is coupled to it, to align in time its own radio frame clock with the second synchronization signal (SS2),
e) the second switching system part (VKB) transmits an identifier (KBA1) for the first base station (BA1) to the second base station (BB2),
f) the second base station (BB2) uses the transmitted identifier (KBA1) to selectively receive the transmitted radio frames from the first base station (BA1), determines their time error with respect to its own radio frame clock, and transmits the time error (TDIF) to the second switching system part (VKB), and
g) in response to this, the second switching system part (VKB) transmits a third synchronization signal (SS3) to the second base station (BB2), with a transmission time being chosen as a function of the transmitted time error (TDIF) such that the radio frame clock of the second base station (BB2) is synchronized with the radio frames of the first base station (BA1) by time alignment with the third synchronization signal (SS3).

2. Method according to Claim 1,
**characterized**
**in that**, when choosing the transmission time for the third synchronization signal (SS3), its delay time between the second switching system part (VKB) and the second base station (BB2) is taken into account as a compensating factor.

3. Method according to one of the preceding claims,
**characterized**
**in that** the first (SS1) and the second (SS2) synchronization signal are each transmitted during the startup of the relevant switching system part (VKA, VKB).

4. Method according to one of the preceding claims,
**characterized**
**in that**, when the second base station (BB2) has been successfully synchronized, the second switching system part (VKB) is configured as a synchronization source (Q) for further switching system parts (VK, VKB) in the mobile radio network.

5. Method according to one of the preceding claims,
**characterized**
**in that** the second base station (BB2) uses radio frames received by it during operation to determine any drift in its own radio frame clock, and transmits drift information (DI) to the second switching system part (VKB), and
**in that** the second switching system part (VKB) uses the transmitted drift information (DI) to derive correction information (KI) and transmits this to at least one further base station (BB1, BB3), which is coupled to the second switching system part (VKB) and in each case readjusts its radio frame clock on the basis of the transmitted correction information (KI).

## Revendications

1. Procédé pour la synchronisation de stations de base, couplées à divers composants de système de commutation, d'un réseau de téléphonie mobile, dans lequel
a) lors du démarrage des composants de système de commutation (VKA, VKB), un premier composant de système de commutation (VKA) est configuré comme source de synchronisation (Q) et un second composant de système de commutation (VKB) comme puits de synchronisation (S),
b) une première station de base (BA1) est configurée par la source de synchronisation (Q, VKA) comme émetteur de trames radio et une seconde station de base (BB2) est configurée par le puits de synchronisation (S, VKB) comme récepteur des trames radio,
c) le premier composant de système de commutation (VKA) ordonne à la première station de base (BA1), couplée au composant de système de commutation, par la transmission d'un premier signal de synchronisation (SS1) d'envoyer des trames radio alignées dans le temps sur le premier signal de synchronisation (SS1),
d) le second composant de système de commutation (VKB) ordonne à la seconde station de base (BB2) couplée au composant de système de commutation, par la transmission d'un second signal de synchronisation (SS2), d'aligner un cycle propre de trame radio dans le temps sur le second signal de synchronisation (SS2),
e) le second composant de système de commutation (VKB) transmet un code (KBA1) de la première station de base (BA1) à la seconde station de base (BB2),
f) la seconde station de base (BB2) reçoit à l'aide du code (KBA1) transmis de façon sélective les trames radio envoyées de la première station de base (BA1), détermine leur écart de temps par rapport au propre cycle de trame radio et transmet l'écart de temps (TDIF) au second composant de système de commutation (VKB), et
g) le second composant de système de commutation (VKB) transmet en conséquence un troisième signal de synchronisation (SS3) à la seconde station de base (BB2), un moment de transmission étant choisi en fonction de l'écart de temps (TDIF) transmis de telle sorte que le cycle de trame radio de la seconde station de base (BB2) soit synchronisé par un alignement dans le temps sur le troisième signal de synchronisation (SS3) avec les trames radio de la première station de base (BA1).

2. Procédé selon la revendication 1,
**caractérisé en ce que**,
pour le choix du moment de transmission du troisième signal de synchronisation (SS3), son temps de propagation entre le second composant de système de commutation (VKB) et la seconde station de base (BB2) est pris en compte de façon compensatrice.

3. Procédé selon l'une quelconque des revendications précédentes,
**caractérisé en ce que**
le premier signal de synchronisation (SS1) et le second signal de synchronisation (SS2) sont transmis à chaque fois lors du démarrage du composant de système de commutation (VKA, VKB) concerné.

4. Procédé selon l'une quelconque des revendications précédentes,
**caractérisé en ce que**,
une fois effectuée la synchronisation de la seconde station de base (BB2), le second composant de système de commutation (VKB) est configuré comme source de synchronisation (Q) pour d'autres composants de système de commutation (VK, VKB) du réseau de téléphonie mobile.

5. Procédé selon l'une quelconque des revendications précédentes,
**caractérisé en ce que**
la seconde station de base (BB2) détermine à l'aide de trames radio reçues au cours du service une dérive du propre cycle de trame radio et transmet une information de dérive (DI) au second composant de système de commutation (VKB), et **en ce que**, par le second composant de système de commutation (VKB), une information de correction (KI) est déduite de l'information de dérive (DI) transmise et est transmise à au moins une autre station de base (BB1, BB3) couplée au second composant de système de commutation (VKB), laquelle station règle ultérieurement à chaque fois son cycle de trame radio à l'aide de l'information de correction (KI) transmise.
